# EUROPEAN PATENT SPECIFICATION

(11) **EP 3 209 938 B1**
(45) Date of publication and mention of the grant of the patent: **13.01.2021**
(21) Application number: 15763651.5
(22) Date of filing: 24.06.2015
(51) Int. Cl.: F23G 5/027, F23G 5/16, F23G 5/20

(54) **METHOD AND PLANT FOR PRODUCING METHANE FROM MATERIALS CONTAINING ORGANIC CARBON**
VERFAHREN UND ANLAGE ZUR HERSTELLUNG VON METHAN AUS MATERIALIEN MIT ORGANISCHEM KOHLENSTOFF
PROCÉDÉ ET INSTALLATION POUR PRODUIRE DU MÉTHANE À PARTIR DE MATÉRIAUX ET/OU DE MATIÈRES CONTENANT DU CARBONE ORGANIQUE

(30) Priority: 09.07.2014 IT TO20140553
(43) Date of publication of application: 30.08.2017
(73) Proprietor: Area 45.55 S.r.l., 15050 Carbonara Scrivia (AL) (IT)
(72) Inventor: BENZI, Giuseppe, 15050 Carbonara Scrivia (AL) (IT)
(74) Representative: Garavelli, Paolo
(86) International application number: PCT/IT2015/000169
(87) International publication number: WO 2016/006010

(56) References cited:
- WO-A1-2004/048851
- WO-A1-2015/125166
- FR-A1- 2 736 419
- US-A1- 2002 141 918
- US-A1- 2003 079 411

## Description

The present invention refers to a method and a plant for producing methane from materials containing organic carbon. The transformation occurs by subjecting to pyrolysis said materials containing organic carbon at the temperature of about 685°C and at the presence of an electromagnetic field generated at a frequency of 2.5÷2.8 kHz, and greater harmonics, and an intensity equal to about one Tesla.

Disposal of wastes is a severe problem, since it is becoming more and more difficult to find areas aimed to be a tip, and incineration has a high cost and, if not correctly performed, can give rise to environmental pollutions.

Treatment plants have been devised, known as thermal valorising plants, which use plastic materials as fuel for producing heat, and also plants for treating biomasses which, through fermenting, produce fuel gas.

Prior document IT-A-0001424062, in the name of the same Applicant, proposes a new method, and its related plant, for disposing plastic materials, of biomasses and of vegetal oils and spent greases, which allows obtaining fuel gas, through a pyrolysis treatment.

The method essentially consists in subjecting solid and liquid wastes to be disposed of to a pyrolysis treatment which allows extracting synthesis fuel gas (syngas), obtaining an inert residual which gives no problems for its disposal in a tip. A typical composition of the syngas comprises a mixture of **H₂, CO, CO₂** and **CH₄.**

Researches have shown that, if pyrolysis occurs at the presence of an electromagnetic field in radio frequency, included between 2 and 3 kHz or, better, between 2.5 and 2.8 kHz, and intensity equal to about one Tesla, the balance of the syngas forming reaction being strongly moved towards methane, so that the waste treatment plant can be considered, in all respects, a methane producing plant. In fact, the percentage of methane, at the presence of said electromagnetic field, becomes greater than 90%, being able to exceed even 95%. Operating with higher harmonics, the same result is obtained, but a field intensity increase is required with respect to the fundamental frequency of 2÷3 kHz or, preferably, 2.5÷2.8 kHz. [→ page 2A] US-A1-2002/141918 discloses a method for treating solid and liquid wastes comprising materials containing organic carbon of the type which provides a pyrolysis treatment of said solid and liquid wastes, from which a synthesis gas is obtained, comprising methane and an inert residual, wherein the pyrolysis reactions start inside the pyrolysis chamber and end in a following settling chamber, placed immediately downstream of said pyrolysis chamber.

WO-A1-2015/125166 discloses a method and plant for disposing of wastes composed of plastic material and biomasses, and is a document according to Art. 54(3) EPC.

Object of the present invention is therefore solving providing a method and a plant for carrying out said method, for producing methane starting from wastes containing organic carbon.

The method therefore consists in subjecting solid and liquid wastes to be disposed of to a pyrolysis treatment at the presence of an electromagnetic field whose frequency is included between 2 and 3 kHz or, preferably, between 2.5 and 2.8 kHz, and higher harmonics, and intensity equal to about 1 Tesla, which allows extracting synthesis fuel gas (syngas) containing a percentage of methane greater than 90%, obtaining a inert residual which does not give problems for its disposal in a tip.

The plant substantially comprises:
- a first section in which pyrolysis occurs of waste materials and synthesis gas (syngas) and residual ashes are produced;
- a second section in which the lighter fraction of said ashes, namely carbon dust or carbon black which is transported by syngas, is separated from said syngas;
- a third section in which the fractioned distillation occurs of the pyrolysis products, obtaining high-boiling hydrocarbons, namely a bituminous residual (*tar*) ;
- a fourth section in which recycling is performed of the bituminous residual of said fractioned distillation, for a further treatment, said bituminous residual being able to be mixed with said liquid wastes.

The pyrolysis chamber is substantially composed of a special heated pipe equipped with a mechanized system for the controlling movement and advancement of the solid mass to be subjected to the pyrolysis treatment. The pipe is externally insulated with ceramic tissue and, by means of a motor-reducer assembly, is made slowly rotate around its own axis.

The use of the method and the plant according to the invention in practice allows transforming solid and liquid wastes containing organic carbon into a fuel gas very rich in methane (**CH₄** > 90%) and in inert residuals. Part of the fuel gas is used for producing the necessary energy for the operation of the whole plant, while the residual inert fraction, whose volume is much lower than the one of the initial mass of wastes, can be disposed of in a tip without particular problems, both for the reduced amount of said ashes, and because the same are not polluting.

The above and other objects and advantages of the invention, as will result from the following description, are obtained with a method and a plant for producing methane from materials containing organic carbon as claimed in the respective independent claims. Preferred embodiment and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as will appear from the enclosed claims.

The invention will now be described, merely as a non-limiting example, according to a preferred embodiment and with reference to the enclosed figures, in which:
- Figure 1 shows the functional diagram of the pyrolysis plant for producing of methane;

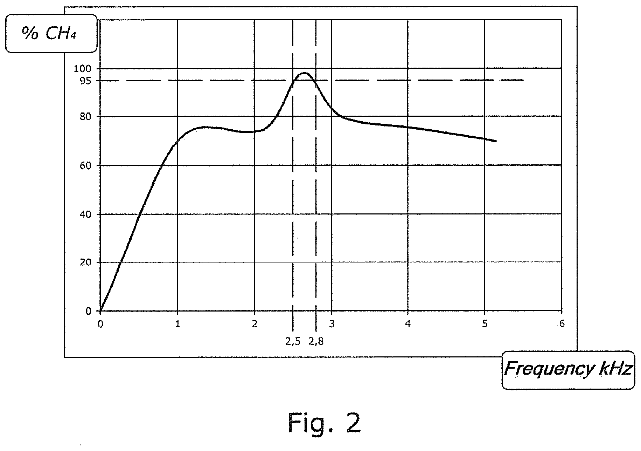

- Fig. 2 shows the relationship between the frequency of the used electromagnetic field and the yield of the reaction methane.

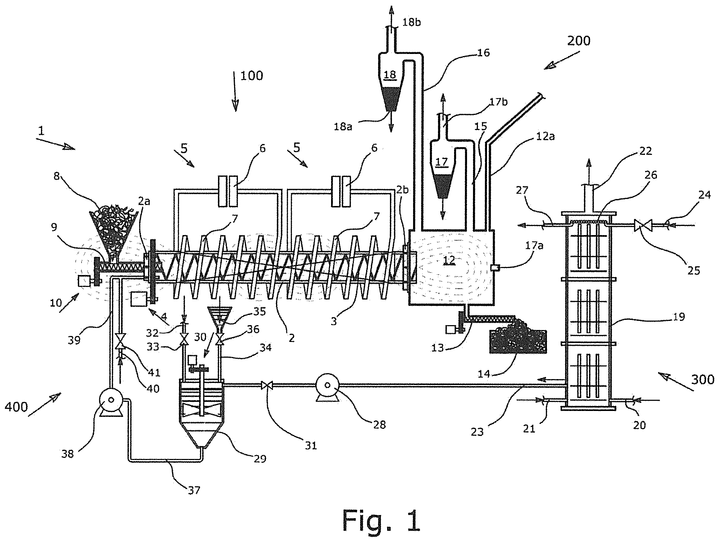

With reference to Figure 1, (1) designates a pyrolysis plant for producing methane from materials containing organic carbon, according to the invention, heated with high frequency currents. This pyrolysis plant (1) comprises:
- a first section (100), in which pyrolysis occurs of waste materials and synthesis gas (syngas) is produced;
- a second section (200), in which the chemical reactions are completed, and the lighter fraction of said ashes (carbon dust or carbon black), which is transported by the syngas, is separated from said syngas;
- a third section (300), in which the fractioned distillation of pyrolysis products occurs, obtaining high-boiling hydrocarbons or bituminous residual, (*tar*) ;
- a fourth section (400), in which the recycle is performed of the bituminous residual of said fractioned distillation, for a further treatment.

The first section (100) comprises a reactor composed of a steel cylinder (2) rotating around its own axis, externally equipped with insulation, for example made of ceramic fiber. Inside the cylinder (2), for all its length, a steel bar (3) is welded, for example with a helically curved, 30 mm x 30 mm section, which is an Archimedean screw. The cylinder is closed at its two ends through side plugs (2a, 2b) made of a steel plate with milled contact surface, equipped with a high temperature packing. The two plates (2a, 2b) are tightened with steel dynamometric springs in order to create a perfect seal. In fact, oxygen must absolutely be prevented from entering into the reactor, since it will develop a strongly exothermic reaction, due to the syngas combustion, with the risk of explosions.

A chain with large steel meshes (not shown) is placed inside the pyrolysis chamber (2), and has the function of breaking, during the rotation of the cylinder (2), big clots which could be generated by the violence of the reaction.

The cylinder (2) is rotated by a first motor-reducer assembly (4) controlled by a PLC (not shown) and is internally heated by heating means (5), in such a way as to bring the solid mass to its reaction temperature.

According to a preferred embodiment, the internal diameter of the pyrolysis chamber (2) is included between 600 and 900 mm, while the length is included between 6 and 12 m.

The heating means (5) comprise a pair of induced current generators (6) with alternate current at 2.5 ÷ 2.8 kHz in order to take the internal temperature to about 685°C, at which the pyrolysis process, which is endothermic, occurs.

Each of the two generators (6) is connected to a coil (7), inside which the pyrolysis cylinder (2) slowly rotates, at a speed included, for example, between 1 and 3 revs/min. The two coils (7) transmit the high frequency induced current created by the two generators so that the cylinder (2) becomes seat of strays currents which heat it due to Joule effect.

The two generators (6) alternatively operate to heat from beginning to half the reaction chamber and from half to end of the reaction chamber.

With a diameter of 600 mm and a length of 6 m, the necessary power to heat the materials at the process temperature is of about 80 kW for each generator.

The two generators (6) create an electromagnetic field which has a behaviour represented by the dashed lines in Figure 1. As can be seen, the electromagnetic field affect both the pyrolysis cylinder (2), and, with the side lobes, the loading zone and a settling chamber (12) placed downstream of the pyrolysis cylinder (2), in which reactions started in the pyrolysis cylinder (2) are completed.

The temperature check is performed by means of two laser probes (not shown) placed at the inlet and at half the pyrolysis chamber (2). The two check points are composed, each, of three sequential detection points.

Loading of the cylinder (2) occurs, at the first end of the cylinder (2), by means of a hopper (8) which supplies a scroll (9) rotated by a second motor-reducer assembly (10). If wastes to be treated are solid, they are firstly ground in small pieces whose size is about 1 cm and loaded by means of said scroll (9) with a compression ratio preferably from 1:150 to 1:250 and with an adjustable speed. Seepage of oxygen is avoided by a star valve (not shown) placed between hopper and scroll. If instead wastes are liquid, they are loaded in the recycling section (400), as specified better below.

The material is loaded into the hopper (8) and pressure-inserted by the scroll (9), reaches inside the cylinder (2) whose rotation, coupled with the Archimedean screw (3), pushes it towards the second end of the cylinder (2).

In the path along the cylinder (2), at the temperature of about 685°C, solid wastes, mainly composed of plastic materials of the polyethylene, polypropylene, ABS, PET, polystyrene, polyurethane type or from biomass (wood, depuration sludge, rice straw, etc.) are subjected to pyrolysis producing solid and gaseous compounds. The gaseous fraction, called syngas, comprises a mixture of **CO, CO₂, H₂ ,CH₄, OH⁻, H⁺** (volatile fraction at ambient temperature) and drags high-boiling hydrocarbons (*tar*), oxygenated products having various molecular weights as overheated vapour and pulverized carbon (carbon black), while the solid fraction comprises extremely reduced amount of residual ashes.

The pyrolysis chamber (2) communicates with said settling chamber (12) which behaves as "ionic copulation" chamber, in which reactions are completed.

The "ionic copulation" chamber (12) has an inspection window (17a) and, on the bottom, a double scroll (13) for discharging ashes in a container (14). The system guarantees the perfect seal in order to prevent syngas from leaking, because the scrolls (13) are more than one meter long and remains always full of ash, which operates as plug.

The composition of syngas at the pyrolysis chamber (2) outlet is approximately the following: **CH₄** = 65%, **CO** = 10% and **CO₂** = 10%, **H₂** < 1%, **O₂** < 0.15%.

In the settling or "ionic copulation" chamber (12) the conversion process into **CH₄** of **H₂,** of **CO,** of overheated steam, of **CO₂,** of **C** (carbon black) and of high boiling hydrocarbons (*tar*) starts.

The composition of syngas at the ionic copulation chamber (12) outlet is as follows: **CH₄** = 90. 95%, **CO₂** + **CO** = 5-10%, **O₂** < 0.15%.

The second section (200) comprises the settling chamber (12) from which syngas is conveyed, through a first duct (15) and a second duct (16), towards a first cyclone (17) and, respectively, a second cyclone (18). Inside these cyclones (17) and (18), syngas is treated in order to complete the separation from carbon dust (carbon black) which it transported, this carbon dust being discharged through a lower opening (17a), (18a) of said first and second cyclones (17), (18), while from the upper part (17b), (18b) the thereby depurated syngas (very rich in methane) is made go out.

The third section (300), in which the fractioned separation of the pyrolysis products occur, comprises a fractioned distillation column (19) composed, for example, of three overlapped elements equipped with condensation plates and with cooling serpentines with regulation of the necessary amount of water for keeping each module at the condensation temperature of the mixtures of high boiling product, which then abandon the syngas. All condensed high boiling products are conveyed on the bottom of the column.

In the lower part of the fractioned distillation column (19), syngas enters, through the ducts (20) and (21), whose syngas comes from the separating cyclones (17) and (18). In column (19) the volatile fraction of the syngas is separated from high boiling hydrocarbons, which compose the bituminous residual (*tar*) and goes out of the upper outlet (22), while the high boiling hydrocarbons go out of the lower outlet (23). The syngas is conveyed towards a blower (not shown) which creates a slight depression in the pyrolysis chamber (2) and sends the syngas towards basic and acid washing columns (not shown) filled with weakly acid water, which takes care to the further cooling of the syngas which is in the step of completing the catalysis process. The pH always remains around the value included between 6 and 7 during the whole process. Afterwards, the product gas passes in a column (not shown) filled with active carbons (vegetal charcoal) to lose humidity and possible traces of still present high boiling hydrocarbons. In addition to the active carbon, the column is equipped with an advanced filtering system composed of a layer of sand and of a layer of iron oxide, which is used for removing the formation of possible cyanides, which are transformed into ferric ferrocyanide (Prussian blue)

Through a duct (24), which enters into the high part of the column (19), cooling water is made pass, said inlet being controlled by a valve (25) and an electronic litre-counter (not shown). Water then crosses a serpentine (26) and goes out, as overheated vapour, of a duct (27).

In the fourth section (400), a recirculation occurs of high boiling hydrocarbons, which go out, through the duct (23), of the lower part of the fractioned distillation column (19), and of carbon dust (carbon black) extracted by the separating cyclones (17) and (18) placed at the outlet of the settling chamber (12).

The fourth section (400) comprises a pump (28) which inserts the high boiling hydrocarbons into a turbo-mixer (29), actuated by a third motor-reducer assembly (30), the flow of said high boiling hydrocarbons being regulated by a valve (31).

Through a duct (32) carbon black coming from the cyclones (17) and (18) is inserted into the turbo-mixer (29), the flow of said carbon black being regulated by a valve (33).

Through a duct (34), also liquid wastes (vegetal oils and spent greases) are inserted into the turbo-mixer (29), the liquid wastes being inserted into a hopper (35) and their flow being regulated by a valve (36).

Nel turbo-mixer (29) an emulsion is produced, which, going along a duct (37), reaches a pump (38), which inserts it into the pyrolysis chamber (2) through a duct (39). Through a duct (40), overheated vapour going out of the fractioned distillation column (19) is inserted into the pyrolysis chamber (2), through the duct (27), the flow of vapour being regulated by a valve (41).

The turbo-mixer (29) is capable of strictly mixing the carbon product going out of the separating cyclones and the *tar* extracted from the base of the fractioned distillation column (19). This mixing is re-inserted at the pyrolysis chamber inlet together with the overheated vapour coming from the serpentines of the fractioned separation column. The amount of vapour is variable between 10% and 15% in weight of wastes loaded at the pyrolyzer inlet. This variatione is due to the natuer of the treated waste. This mixing becomes very efficient with the addition of the spent vegetal oil, inserted into the hopper (35), coming from the differentiated collection, since it has excellent hydrocarbon dissolving properties, even at high concentrations.

The percentage of oxygen present in the pyrolysis chamber is continuously controlled and recorded by an analytic tool of the SYN 100 type, capable of also verifying the percentage of **CO, CO₂, H₂** and **CH₄** in produced syngas. To prevent both syngas from leaking and oxygen from seeping into the pyrolysis chamber, the supply of solid wastes is performed with said scroll (9) at high compacting pressure and pre-heated at a suitable temperature (according to the type of waste) to allow the formation of such a plug as to guarantee the seal of the air inlets system and therefore of oxygen in the pyrolysis chamber (2).

The pyrolysis chamber (2) is kept under a slight depression by the blower, which sends the syngas towards the basic and acid washing columns, this depression being equal to about 0.7 mbar less than the external pressure.

In case of emergency, the produced syngas, after its washing, is sent to an emergency torch (12a), induction generators are turned off and the pyrolysis chamber is washed with nitrogen gas.

The described process occurs at a temperature of about 685°C. This temperature is lower than the Curie temperature for iron, which is 768 °C, and therefore the material of which the pyrolysis chamber (2) is made does not become paramagnetic. Under these conditions, the electromagnetic field, generated by the coils (7) supplied with alternate current by the generators (6), manages to penetrate inside the pyrolysis chamber (2). The temperature of 685°C is however greater than the Curie temperature for treated materials and for syngas components, so that, under the process conditions, such materials are paramagnetic.

Under the process conditions, namely 685°C of temperature and an electromagnetic field whose frequency is included between 2 and 3 kHz or, preferably, between 2.5 and 2.8 kHz, and greater harmonics, and an intensity of about one Tesla, all syngas components are strongly ionized. In such a way, in the "ionic copulation" chamber (12) there is a major formation of methane against the concentration of hydrogen and carbon oxide.

## Claims

1. Method for treating solid and liquid wastes comprising materials containing organic carbon, such as plastic materials and biomasses, of the type which provides for a pyrolysis treatment, of said solid and liquid wastes, from which a synthesis gas (syngas) is obtained, comprising methane, and an inert residual, said pyrolysis being performed at the presence of an electromagnetic field whose frequency is either included between 2 and 3 kHz or higher harmonics thereof, the field intensity being equal to about 1 Tesla, and said magnetic field being adapted to move the pyrolysis reactions towards the formation of a percentage of methane in the syngas greater than 90%; the pyrolysis reactions starting inside a pyrolysis chamber (2) and ending in a following settling chamber (12), placed immediately downstream of said pyrolysis chamber (2), said pyrolysis chamber and said settling chamber (12) being under the influence of said electromagnetic field, wherein the composition of syngas at the pyrolysis chamber (2) outlet is the following: **CH₄** = 65%, **CO** = 10% and **CO₂** = 10%, **H₂** < 1%, **O₂** < 0.15%, in the settling chamber (12) the conversion process into **CH₄** of **H₂,** of **CO,** of overheated steam, of **CO₂,** of **C** (carbon black) and of high boiling hydrocarbons (*tar*) starting, and the composition of syngas at the settling chamber (12) outlet being as follows: **CH₄** = 90÷95%, **CO₂ + CO** = 5÷10%, **O₂** < 0.15%.

2. Method for treating solid and liquid wastes according to claim 1, wherein the frequency of said electromagnetic field is included between 2.5 and 2.8 kHz, in such a way as to increase the percentage of methane in the syngas over 95%.

3. Method for treating solid and liquid wastes according to claim 1 or 2, wherein the process temperature is simultaneously lower than the Curie temperature of the materials of which said pyrolysis chamber (2) and said settling chamber (12) are made, in which chemical reactions occur, and greater than the Curie temperature of the materials to be treated, so that the electromagnetic field manages to penetrate inside said pyrolysis chamber (2) and said settling chamber (12).

4. Method for treating solid and liquid wastes according to any one of claims 1 to 3, wherein the process temperature is about 685°C.

5. Pyrolysis plant for treating solid and liquid wastes through the method according to any one of the previous claims, the pyrolysis plant comprising:
• a first section (100), adapted to perform said pyrolysis of said solid and liquid waste materials, said pyrolysis producing synthesis gas (syngas) and residual ashes;
• a second section (200) adapted to complete the chemical reactions and to perform the separation of the lighter fraction of said ashes (carbon dust or carbon black) from said syngas, said lighter fraction being transported by the syngas;
said first section (100), adapted to perform said pyrolysis of said solid and liquid waste materials, comprising a cylinder (2), or pyrolysis chamber, rotating around its own axis and equipped with:
• external insulation;
• means adapted to generate, by means of said rotation, an advancement of the material contained in said cylinder (2);
• means for loading solid wastes placed at the first end (2a) of the pyrolysis cylinder (2);
• heating means (5) comprising at least one radiofrequency induction generator (6), each one of said at least one generator (6) being connected to a coil (7), inside which said pyrolysis cylinder (2) slowly rotates, said coil (7) transmitting the high frequency induced current created by said at least one generator (6) so that the pyrolysis cylinder (2) becomes seat of stray currents which heat it due to Joule effect;
• means for rotating said cylinder (2); said cylinder (2) being equipped with side plugs (2a, 2b), adapted to perform a suitable seal to prevent an entry of oxygen inside said cylinder (2), said at least one generator (6) being adapted to operate at a frequency either included between 2 and 3 kHz or at higher harmonics thereof, so that the pyrolysis reactions occur under the influence of an electromagnetic field whose frequency is included either between 2 and 3 kHz or higher harmonics thereof and whose field intensity is equal to about 1 Tesla;
• a third section (300), in which the fractioned distillation of pyrolysis products occurs, obtaining high-boiling hydrocarbons or bituminous residual (*tar*);
• a fourth section (400), in which the recycle is performed of the bituminous residual of said fractioned distillation, for a further treatment.

6. Pyrolysis plant according to claim 5, wherein said at least one generator (6) is adapted to produce currents whose frequency is included between 2.5 and 2.8 kHz.

7. Pyrolysis plant according to claim 5, having a chain with big steel meshes, adapted to break, during the cylinder (2) rotation, big clumps which could be generate by the reaction violence.

## Patentansprüche

1. Methode für die Behandlung von festen und flüssigen Abfällen, die Materialien enthalten, welche organischen Kohlenstoff enthalten, wie Kunststoffe und Biomassen, die eine Pyrolysebehandlung der genannten festen und flüssigen Abfälle vorsehen, aus der Synthesegas (Syngas), das Methan enthält, und ein inerter Rest erhalten werden, die genannte Pyrolyse wird bei Vorhandensein eines elektromagnetischen Frequenzbereiches zwischen 2 und 3 kHz oder seinen Oberschwingungen ausgeführt, die Stärke des Bereiches entspricht ca. 1 Tesla, und das genannte Magnetfeld dient dazu, die Pyrolysereaktionen für die Bildung eines Prozentwertes von Methan im Syngas über 90 % zu verschieben; die Pyrolysereaktionen beginnen in einer Pyrolysekammer (2) und enden in einer folgenden Beruhigungs- oder ionischen Verbindungskammer (12), die unmittelbar unter der genannten Pyrolysekammer (2) angebracht ist, die genannte Pyrolysekammer und die genannte ionische Verbindungskammer (12) stehen unter dem Einfluss des genannten elektromagnetischen Magnetfeldes, in dem die Zusammensetzung des Syngases am Ausgang der Pyrolysekammer (2) Folgende ist: **CH₄** = 65%, **CO** = 10% und **CO₂** = 10%, **H₂** < 1%, **O₂** < 0,15%., in der Beruhigungs- oder "ionischen Verbindungs-" -kammer (12), wo der Umwandlungsprozess von **CO** in **CH₄** des **H₂,** des überhitzten Wasserdampfes, des **CO₂,** des **C** (Ruß) und der hochsiedenden Kohlenwasserstoffe (*Teer*) beginnt, und die Zusammensetzung des Syngases am Ausgang der ionischen Verbindungskammer (12) Folgende ist: **CH₄** = 90÷95%, **CO₂** + **CO** = 5÷10%, **O₂** < 0,15%.

2. Methode für die Behandlung von festen und flüssigen Abfällen gemäß Patentanspruch 1, in der die Frequenz des genannten elektromagnetischen Feldes zwischen 2,5 und 2,8 kHz liegt, um den Prozentwert von Methan im Syngas auf über 95 % zu erhöhen.

3. Methode für die Behandlung von festen und flüssigen Abfällen gemäß Patentanspruch 1 oder 2, in der die Prozesstemperatur gleichzeitig unter der Curie-Temperatur der Materialien, mit denen die genannte Pyrolysekammer (2) und die genannte ionische Verbindungskammer (12) hergestellt werden, in der die chemischen Reaktionen erfolgen, und über der Curie-Temperatur der zu behandelnden Materialien liegt, sodass das elektromagnetische Feld es schafft, in das Innere der genannten Pyrolysekammer (2) und der genannten ionischen Verbindungskammer (12) einzudringen.

4. Methode für die Behandlung von festen und flüssigen Abfällen gemäß einem beliebigen der Patentansprüche von 1 bis 3, in der die Prozesstemperatur ca. 685 °C beträgt.

5. Pyrolyseanlage für die Behandlung von festen und flüssigen Abfällen durch die Methode gemäß einem beliebigen der vorhergehenden Patentansprüche, die Pyrolyseanlage enthält:
• Einen ersten Abschnitt (100), der dazu dient, die genannte Pyrolyse der genannten festen und flüssigen Abfallmaterialien auszuführen, die genannte Pyrolyse produziert Synthesegas (Syngas) und Restaschen;
• Einen zweiten Abschnitt (200), der dazu dient, die chemischen Reaktionen zu beenden und die Trennung einer leichteren Fraktion der genannten Aschen (Kohlenstaub oder Ruß) vom Syngas auszuführen, die genannte leichtere Fraktion wird vom Syngas transportiert;
Der genannte erste Abschnitt (100), der dazu dient, die genannte Pyrolyse der genannten festen und flüssigen Abfallmaterialien auszuführen, enthält eine Trommel (2) oder eine Pyrolysekammer, die sich um ihre eigene Achse dreht und mit Folgendem ausgestattet ist:
• Äußere Wärmedämmung;
• Mittel, die dazu dienen, durch die genannte Rotation einen Vorschub des in der genannten Trommel (2) enthaltenen Materials auszulösen;
• Lademittel der festen Abfälle, die am ersten Ende (2a) der Pyrolysetrommel (2) positioniert sind;
• Heizmittel (5), die mindestens einen Hochfrequenzinduktionsgenerator (6) enthalten, jeder der genannten mindestens eine Generator (6) ist mit einer Spule (7) verbunden, in der sich die genannte Pyrolysetrommel (2) langsam dreht, die genannte Spule (7) überträgt den Hochfrequenzinduktionsstrom, der von mindestens einem Generator (6) erzeugt wird, sodass die Pyrolysetrommel (2) eine Aufnahme für Parasitenströme wird, die sie durch den Jouleeffekt erhitzen;
• Mittel, um die genannte Trommel (2) in Rotation zu versetzen; Die genannte Trommel (2) ist mit Seitenverschlüssen (2a, 2b) ausgestattet, die dazu dienen, eine angemessene Dichtheit herzustellen und den Eintritt von Sauerstoff in die genannte Trommel (2) zu verhindern, der genannte mindestens eine Generator (6) dient dazu, bei einer Frequenz zwischen 2 und 3 kHz oder ihren Oberschwingungen zu arbeiten, sodass die Pyrolysereaktionen unter dem Einfluss eines elektromagnetischen Feldes zwischen 2 und 3 kHz oder ihren Oberschwingungen erfolgen und sodass die Stärke des Bereiches ca. 1 Tesla entspricht;
• Einen dritten Abschnitt (300), in dem die fraktionierte Destillation der Pyrolyseprodukte erfolgt, sodass Kohlenwasserstoffe mit einem hohen Siedepunkt oder Bitumenrest (Teer) erhalten werden;
• Einen vierten Abschnitt (400), in dem das Recycling des Bitumenrestes der genannten fraktionierten Destillation für eine weitere Behandlung ausgeführt wird.

6. Pyrolyseanlage gemäß Patentanspruch 5, in dem der genannte mindestens eine Generator (6) dazu dient, Ströme mit einer Frequenz zwischen 2,5 und 2,8 kHz zu erzeugen.

7. Pyrolyseanlage gemäß Patentanspruch 5, die eine Kette mit großen Stahlgliedern hat, welche dazu dient, während der Drehung der Trommel (2) große Klumpen zu zerbrechen, die möglicherweise durch die Gewalt der Reaktion erzeugt werden.

## Revendications

1. Méthode pour le traitement de déchets solides et liquides comprenant des matières contenant du carbone organique, telles que les matières plastiques et les biomasses, du type prévoyant un traitement de pyrolyse, de ces déchets solides et liquides, à partir desquels on obtient un gaz de synthèse (syngas), comprenant du méthane et des résidus inertes ; la pyrolyse est réalisée en présence d'un champ électromagnétique ayant une fréquence comprise entre 2 et 3 kHz ou ses harmoniques supérieures, l'intensité du champ est égale à 1 Tesla et le champ magnétique est apte à déplacer les réactions de pyrolyse vers la formation d'un pourcentage de méthane dans le syngas supérieur à 90% ; les réactions de pyrolyse commencent à l'intérieur d'une chambre de pyrolyse (2) et se terminent dans la chambre suivante de calme ou de copule ionique (12), située immédiatement en aval de la chambre de pyrolyse (2) ; la chambre de pyrolyse et la chambre de copule ionique (12) sont sous l'influence du champ électromagnétique, où la composition du syngas à la sortie de la chambre de pyrolyse (2) est la suivante : **CH₄ =** 65%, **CO** = 10% **et CO₂** = 10%, **H₂** < 1%, **O₂** < 0,15%., dans la chambre de calme ou de « copule ionique » (12) en commençant le processus de conversion en **CH₄** du **H₂,** du **CO,** de la vapeur d'eau surchauffée, du **CO₂,** du **C** (noir de carbone) et des hydrocarbures à haut point d'ébullition (*tar*), et la composition du syngas à la sortie de la chambre de copule ionique (12) étant la suivante : **CH₄** = 90÷95%, **CO₂** + **CO** = 5÷10%, **O₂** < 0,15%.

2. Méthode pour le traitement de déchets solides et liquides, selon la revendication 1, où la fréquence du champ électromagnétique est comprise entre 2,5 et 2,8 kHz, afin d'augmenter le pourcentage de méthane dans le syngas au-delà de 95%.

3. Méthode pour le traitement de déchets solides et liquides, selon la revendication 1 ou 2, où la température du procédé est simultanément inférieure à la température de Curie des matières avec lesquelles sont réalisées la chambre de pyrolyse (2) et la chambre de copule ionique (12) où se produisent les réactions chimiques, et supérieure à la température de Curie des matières à traiter de sorte que le champ électromagnétique puisse pénétrer à l'intérieur de la chambre de pyrolyse (2) et de la chambre de copule ionique (12).

4. Méthode pour le traitement de déchets solides et liquides, selon une des revendications de 1 à 3, où la température de procédé est d'environ 685°C.

5. Installation de pyrolyse pour le traitement de déchets solides et liquides à travers la méthode selon l'une des revendications précédentes, l'installation de pyrolyse comprend :
• une première section (100), apte à effectuer la pyrolyse des déchets solides et liquides ; cette pyrolyse produit du gaz de synthèse (syngas) et des cendres résiduelles ;
• une deuxième section (200) apte à terminer les réactions chimiques et à exécuter la séparation de la fraction la plus légère des cendres (charbon pulvérisé ou noir de carbone) à partir du syngas, cette fraction la plus légère est transportée par le syngas ;
la première section (100), apte à exécuter la pyrolyse des déchets solides et liquides comprend un cylindre (2) ou chambre de pyrolyse, pivotant autour de son axe et doté de :
• isolation externe ;
• moyens aptes à provoquer, à travers la rotation, un avancement de la matière contenue dans le cylindre (2) ;
• moyens de chargement des déchets solides positionnés à la première extrémité (2a) du cylindre de pyrolyse (2) ;
• moyens chauffants (5) comprenant au moins un générateur (6) à induction à radio fréquence ; chacun de ces générateurs (6) est relié à une bobine (7) à l'intérieur de laquelle le cylindre de pyrolyse (2) tourne lentement ; la bobine (7) transmet le courant induit à haute fréquence créé par au moins un générateur (6) de sorte que le cylindre de pyrolyse (2) devienne le siège de courants de Foucault qui le chauffent par effet Joule ;
• moyens pour mettre en rotation le cylindre (2) ;
le cylindre (2) est doté de bouchons latéraux (2a, 2b), aptes à réaliser une tenue empêchant l'entrée d'oxygène à l'intérieur du cylindre (2), le générateur (6) est apte à travailler à une fréquence comprise entre 2 et 3 kHz ou ses harmoniques supérieures, de sorte que les réactions de pyrolyse se produisent sous l'influence d'un champ électromagnétique ayant une fréquence comprise entre 2 et 3 kHz ou ses harmoniques supérieures et dont l'intensité de champ est égale environ à 1 Tesla ;
• une troisième section (300), où se produit la distillation fractionnée des produits de pyrolyse, en obtenant des hydrocarbures à point d'ébullition élevée ou résidu bitumineux (tar) ;
• une quatrième section (400) où se produit le recyclage du résidu bitumineux de la distillation fractionnée pour un autre traitement.

6. Installation de pyrolyse, selon la revendication 5, où au moins un générateur (6) est apte à produire des courants de fréquence compris entre 2,5 et 2,8 kHz.

7. Installation de pyrolyse, selon la revendication 5, ayant une chaîne à grandes mailles en acier, apte à briser, pendant la rotation du cylindre (2), les gros grumeaux pouvant être créés par la violence de la réaction.
